# FASCICULE DE BREVET EUROPEEN

(11) **EP 1 633 984 B1**
(45) Date de publication et mention de la délivrance du brevet: **29.10.2014**
(21) Numéro de dépôt: 04767169.8
(22) Date de dépôt: 25.05.2004
(51) Int. Cl.: F04D 29/26, G01M 1/30, G01M 1/12, H02K 15/16

(54) **MACHINE ELECTRIQUE TOURNANTE COMPORTANT UN VENTILATEUR**
ROTIERENDE ELEKTRISCHE MASCHINE MIT GEBLÄSE
ROTATING ELECTRICAL MACHINE COMPRISING A VENTILATOR

(30) Priorité: 26.05.2003 FR 0306347
(43) Date de publication de la demande: 15.03.2006
(73) Titulaire: VALEO EQUIPEMENTS ELECTRIQUES MOTEUR, 94017 Créteil (FR)
(72) Inventeur: VASILESCU, Claudiu, F-75020 Paris (FR); TELLIER, Richard, F-75011 Paris (FR)
(74) Mandataire: Gamonal, Didier
(86) Numéro de dépôt international: PCT/FR2004/001291
(87) Numéro de publication internationale: WO 2004/106747

(56) Documents cités:
- EP-A- 0 962 660
- WO-A-02/054566
- WO-A-02/097279
- GB-A- 2 250 783
- US-A- 5 791 595
- US-A1- 2001 041 138
- US-B1- 6 358 009
- PATENT ABSTRACTS OF JAPAN vol. 006, no. 103 (E-112), 12 juin 1982 (1982-06-12) & JP 57 036564 A (MATSUSHITA ELECTRIC WORKS LTD), 27 février 1982 (1982-02-27)

## Description

### Domaine de l'invention

L'invention concerne un ensemble d'éléments destinés à être assemblés ensemble pour former une machine électrique tournante, du type alternateur ou alterno-démarreur, dans laquelle le ventilateur a la particularité d'être équilibré avant d'être monté sur le rotor de la machine.

L'invention trouve des applications dans le domaine de l'industrie automobile et, en particulier, dans le domaine des alternateurs et alterno-démarreurs pour véhicules automobiles.

### Etat de la technique

Dans un véhicule automobile, l'alternateur permet de transformer un mouvement de rotation du rotor inducteur, entraîné par le moteur thermique du véhicule, en un courant électrique induit dans le bobinage du stator. L'alternateur peut aussi être réversible. Il constitue alors un moteur électrique qui peut entraîner en rotation, via l'arbre du rotor, le moteur thermique du véhicule. Cet alternateur réversible est appelé alterno-démarreur.

Dans une machine électrique tournante, qu'il s'agisse d'un alternateur ou d'un alterno-démarreur, certains éléments, tels que le circuit électronique de commande, le pont de redressement et les bobinages du stator et du rotor, génèrent de la chaleur. Il est donc impératif de refroidir la machine. Cela est généralement réalisé au moyen d'un dispositif de ventilation qui comporte au moins un ventilateur placé à l'intérieur de la machine. Certaines machines comportent un seul ventilateur placé généralement à l'arrière du rotor, c'est-à-dire du coté du pont redresseur dans le cas d'un alternateur. D'autres machines comportent deux ventilateurs placés, respectivement, à l'avant et à l'arrière du rotor.

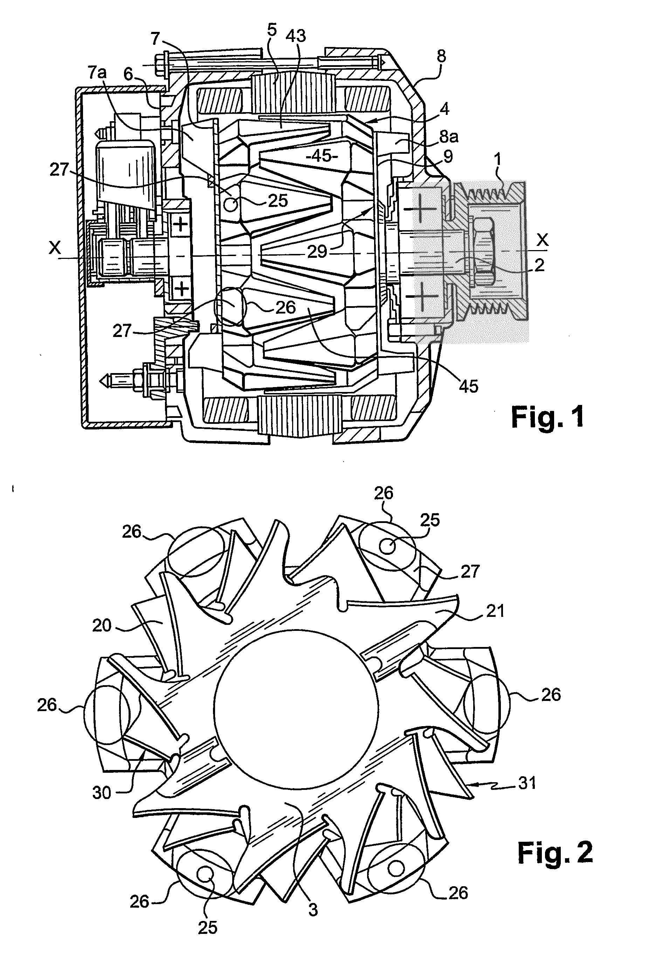

Un exemple d'un alternateur équipé de deux ventilateurs est représenté sur la figure 1.

Cet alternateur comporte un organe 1 de transmission de mouvements, appelé poulie, appartenant à un dispositif de transmission de mouvements, non représenté sur la figure 1, intervenant entre le moteur thermique du véhicule et l'alternateur. Cet organe 1 est traversé, en partie, par un arbre de rotation 2, dont il est solidaire en rotation et dont l'axe de symétrie axiale XX constitue l'axe de rotation de la machine. Cet arbre de rotation 2 porte un rotor 4, par exemple un rotor à griffes, pourvu d'au moins un bobinage d'excitation. Le rotor 4 est entouré par un stator bobiné 5 qui comporte un ou plusieurs enroulements pour constituer le bobinage induit. Le stator 5 est porté par un palier avant 8 et un palier arrière 6, tous deux comportant aux extrémités axiales un roulement à billes portant l'arbre de rotation 2.

Dans l'exemple de la figure 1, l'alternateur comporte deux ventilateurs, un ventilateur 9 à l'avant du rotor et un ventilateur 7 arrière, tous deux solidaires du rotor. Un autre exemple d'alternateur pourrait comporter un seul ventilateur, généralement le ventilateur arrière 7 plus puissant que le ventilateur avant 9 placé du coté de la poulie d'entraînement 1.

Un tel ventilateur comporte un flasque 3 d'où part au moins une série de pales saillantes 8a, 7a. Il est fixé, généralement, sur le rotor par soudage du flasque sur le rotor. Or, par sa fabrication, un ventilateur est généralement asymétrique, à l'origine. Autrement dit, si on cherche à faire tourner un ventilateur en son point de rotation, on s'aperçoit qu'il n'est pas équilibré naturellement. Par ailleurs, le rotor n'est pas non plus équilibré, à l'origine. Par conséquent, le fait de fixer un ventilateur non équilibré sur un rotor non équilibré crée un certain balourd de l'ensemble rotor/ventilateur lors de la mise en mouvement de cet ensemble. Ce balourd induit une excentricité lors de la rotation du rotor qui provoque une flèche significative de l'arbre et des vibrations radiales du rotor qui peuvent l'amener en contact mécanique avec la périphérie interne du stator.

Pour éliminer ce balourd, l'homme du métier effectue habituellement un équilibrage de l'ensemble avant sa mise en mouvement. Cet équilibrage est réalisé généralement en modifiant la masse de l'ensemble de façon à en modifier son centre de gravité. Cette modification de la masse est réalisée en retirant de la matière dans le rotor au moyen de canons de perçages qui font des trous 25 dans une zone de perçage 26 prévue dans la base 27 d'au moins une griffe 45 du rotor 4 comme visible à la figure 2. La base 27 de la griffe relie la griffe au flasque 29, perpendiculaire à l'axe XX, de la roue polaire 43. Or, ces canons sont relativement encombrants. Ils nécessitent donc un passage relativement large à travers les pales du ventilateur, c'est-à-dire entre deux pales consécutives du ventilateur. Il est donc nécessaire, pour le passage de ces canons, qu'il y ait un espace minimum 26 entre deux pales consécutives ainsi qu'un angle minimum entre ces deux pales.

Les canons de perçage ont des positions bien définies par rapport aux griffes du rotor. Les zones 26 accessibles à ces canons de perçage ont une distance angulaire d'environ 20° et constituent dès lors des zones interdites pour les pales. Par exemple, si le rotor comporte 8 paires de pôles alors une zone de 160° devient interdite pour les pales de ventilateur.

Ceci a pour conséquence de limiter le nombre de pales possibles du ventilateur. Cela a également pour conséquence de limiter les formes possibles des pales du ventilateur comme par exemple la pale 30 de la figure 2 qui a du être raccourcie pour autoriser le passage du canon. Le raccourcissement des pales à une influence négative sur le débit d'air. De plus, le raccourcissement des pales augmente le balourd constituant ainsi un cercle vicieux. Pour les mêmes raisons, certaines pales 31 sont en porte à faux ce qui nuit à la tenue mécanique du ventilateur lorsque le rotor tourne à des vitesses très élevées.

L'équilibrage de cet ensemble rotor/ventilateur entraîne donc des contraintes sur la forme du ventilateur.

En outre, ces canons de perçages sont destinés à percer des matériaux métalliques. Les canons de perçage ne sont pas capables de percer des matières plastiques sans risquer de les casser ou de les détériorer comme dans le cas de ventilateurs réalisés en plastique. Ainsi, de façon générale, le ventilateur métallique ou plastique avec ou sans insert métallique doit être conçu pour ne pas interférer avec les zones réservées aux canons de perçage. Cela a pour conséquence de ne pas pouvoir optimiser au maximum le ventilateur en terme de débit, bruit ou encombrement.

L'opération d'équilibrage du sous-ensemble rotor-ventilateur est une opération de précision qui exige un temps d'exécution d'autant moins négligeable que le balourd à corriger est élevé.

### Exposé de l'invention

L'invention a justement pour but de remédier aux inconvénients des techniques exposées précédemment et propose un ensemble d'éléments destinés à être assemblés ensemble pour former une machine électrique tournante comportant un stator, un rotor monté sur un arbre de rotation, le rotor comportant des zones destinées à des opérations d'équilibrage un ventilateur comprenant un flasque et des pales de ventilation destinées à être fixées au rotor dans lequel le ventilateur est équilibré.

Autrement dit, l'invention propose une machine électrique tournante du type alternateur, dans laquelle le ventilateur est fixé sur le rotor après avoir été préalablement équilibré. Ainsi, le balourd propre du ventilateur est nul voire très faible si il y a des erreurs de centrage par rapport à l'axe de rotation de la machine lors de sa fixation sur le rotor. Le balourd à corriger étant fortement réduit grâce à l'emploi d'un ventilateur pré-équilibré il est possible d'envisager dès la conception de la machine l'utilisation de canons d'équilibrage de diamètre beaucoup plus petit, et cela d'autant plus si le rotor est lui-même déjà équilibré en partie. Dans le cas ou le rotor est le ventilateur sont parfaitement équilibrés indépendamment l'un de l'autre, l'absence de zone dédiée aux canon de perçage sur le rotor peut même être envisagée ce qui permet de concevoir un ventilateur parfaitement optimisé et de réduire également le temps d'équilibrage qui pourrait se réduire à un simple contrôle.

Selon d'autres caractéristiques de l'invention :
- le flasque du ventilateur a une épaisseur non-constante.
- le flasque du ventilateur comporte des sur-épaisseurs de matière et/ou des zones amincies.
- le flasque du ventilateur comporte des trous.
- moins une pale comporte des ajouts de matière aux fins d'équilibrage du ventilateur.
- au moins une pale comporte un chanfrein aux fins d'équilibrage du ventilateur.
- le ventilateur est un ventilateur composé de deux ventilateurs superposés.
- au moins un des deux ventilateurs superposés comporte des ajouts ou des amincissement ou des enlèvement de matière aux fins d'équilibrage.
- le flasque de chacun des deux ventilateurs superposés comportent des trous ou des amincissement dans au moins dans une même zone.
- le flasque de chacun des deux ventilateurs superposés comportent des trous ou des amincissement dans au moins dans des zones différentes.
- le rotor est prééquilibré.
- un trou d'équilibrage du rotor est au droit d'une pale du ventilateur prééquilibré.
- l'alésage du ventilateur est décentrer pour faire coïncider l'axe de rotation de la machine avec le centre de gravité du ventilateur.
- le ventilateur est fixé de manière décentrée sur le rotor pour faire coïncider l'axe de rotation de la machine avec le centre de gravité du ventilateur.

L'invention concerne également un procédé de montage d'un ventilateur sur un rotor de machine électrique tournante, le rotor comportant des zones réservées au pré-équilibrage, caractérisé en ce qu'il comporte des opérations d'équilibrage du ventilateur puis de fixation du ventilateur équilibré sur le rotor.

### Brève description des dessins

- La figure 1, déjà décrite, représente un alternateur classique avec un ventilateur fixé sur un rotor.
- La figure 2 , déjà décrite, représente une vue axiale d'un ventilateur monté sur un rotor selon l'art antérieur.
- La figure 3 représente un exemple de ventilateur pré-équilibré selon l'invention.
- La figure 4 représente un autre exemple de ventilateur pré-équilibré selon l'invention.
- La figure 5 représente un autre exemple de ventilateur pré-équilibré selon l'invention.
- Les figures 6a et 6b représentent d'autres exemples de ventilateur pré-équilibrés selon l'invention.

### Description détaillée de modes de réalisation de l'invention

L'invention concerne un procédé de conception d'un ventilateur pour une machine électrique tournante, par exemple un alternateur. Ce procédé propose d'équilibrer le ventilateur avant de le monter sur le rotor de la machine.

En d'autres termes, le procédé de l'invention consiste à équilibrer un ventilateur, naturellement non-équilibré, puis à monter et fixer ce ventilateur sur un rotor de machine.

Avantageusement le rotor peut avoir été préalablement équilibré sur son arbre de rotation. Avantageusement, pour réaliser le prééquilibrage du rotor, on peut utiliser des zones prévues pour être recouvertes ultérieurement par les pâles du ventilateur pré-équilibré.

Si le rotor n'est pas équilibré avant le montage, des emplacements pour les canons d'équilibrages seront pris en compte lors de la conception du ventilateur, mais la taille de ces emplacements pourra être réduite de façon notable car le balourd à corriger sera moindre du fait de l'emploi d'un ventilateur pré-équilibré.

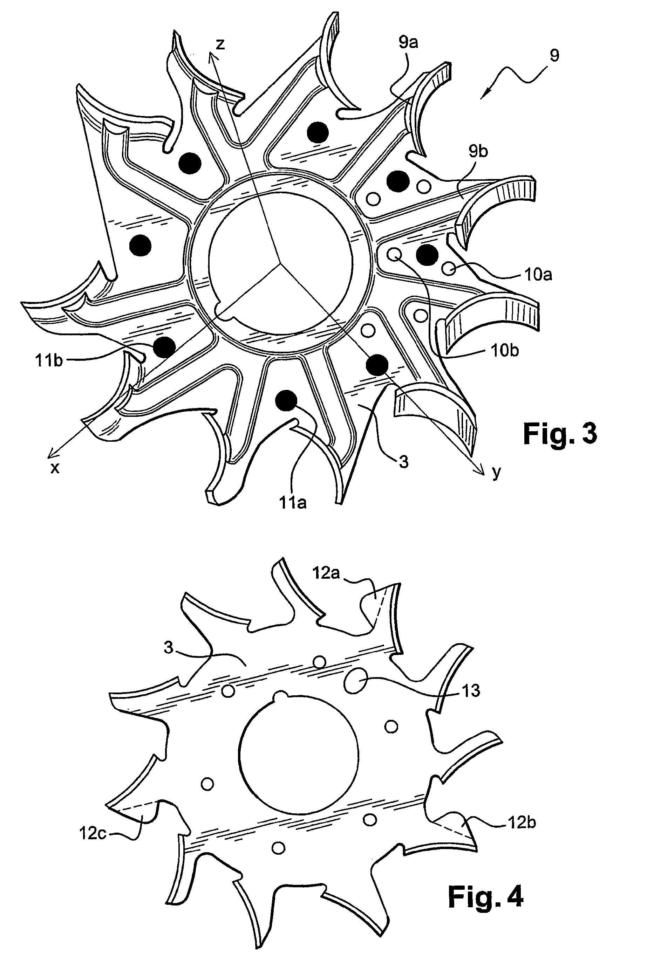

La figure 3 représente un exemple de ventilateur pré-équilibré, c'est-à-dire équilibré avant montage sur le rotor. Ce ventilateur 9 comporte un flasque 3 et une série de pales de ventilation, saillantes par rapport au flasque. Deux pales de cette série de pales de ventilation ont été référencées 9a et 9b. Ce ventilateur de la figure 3 est représenté dans un repère tridimensionnel XYZ ayant le point O pour origine.

L'équilibrage de ce ventilateur 9 est réalisé en déterminant le centre de gravité du ventilateur dans le repère XYZ. On considère que le ventilateur 9 est équilibré lorsque son centre de gravité est confondu avec le point d'origine O du repère si celui-ci coïncide avec l'axe de rotation. Si le centre de gravité ne se trouve pas au point d'origine O tel que précédemment défini, alors le ventilateur est déséquilibré.

Généralement, les ventilateurs sont déséquilibrés naturellement, c'est-à-dire que, par leur fabrication, ils ne sont pas équilibrés tant qu'une opération d'équilibrage n'a pas été effectuée.

Dans l'invention, on cherche à ramener le centre de gravité du ventilateur en ce point d'origine O. Pour cela, on modifie la répartition de la masse du ventilateur, en ajoutant ou en retirant de la matière sur le ventilateur. En pratique, cette modification de la répartition de la masse est réalisée en retirant de la matière dans le ventilateur, créant ainsi des zones amincies et même des orifices, et/ou en ajoutant des sur-épaisseurs de matière sur le ventilateur ou des formes spéciales dans la découpe des pales Plus précisément, la modification de la répartition de la masse est faite sur le flasque du ventilateur. On peut également envisager de réaliser des retraits ou des ajouts de matière sur les pales de ventilation par exemple en réalisant des chanfreins sur ces pales.

L'ajout de matière et le retrait de matière se font par des techniques connues de l'homme du métier, par exemple par variation de l'épaisseur de la matière lorsque le ventilateur est moulé ou surmoulé en plastique ou encore par réalisation de trous ou l'ajout de formes dans le flasque ou dans les pales. Ces modifications au niveau des pales sont facilement réalisable par exemple lorsqu'elles sont en plastique.

Le choix de la quantité de matière à ajouter et/ou à retirer, ainsi que l'emplacement de ces ajouts ou retraits de matière, se fait par une série de calculs mécaniques réalisés à partir de la forme totale du ventilateur (dimensions, nombre de pales, répartition des pales, épaisseurs, etc.).

Après équilibrage, le flasque du ventilateur peut avoir une épaisseur non-constante, c'est-à-dire localement plus épaisse ou, au contraire, amincie. Elle peut aussi comporter des orifices comme ceux référencés 10a et 10b sur la figure 3.

Le ventilateur ainsi équilibré peut être ensuite monté et fixé sur un rotor monté sur un arbre de rotation. Avantageusement , ce rotor a lui-même été équilibré avant de recevoir le ventilateur. On comprend aisément qu'un rotor est plus facilement équilibrable, tant qu'il n'y a pas de ventilateur monté sur lui. Il n'y a, en effet, aucune pale de ventilation et pas de flasque en plastique pour gêner le passage des canons de percement et le percement du métal. Le rotor peut donc être facilement équilibré au moyen de canons de percement.

Le montage du ventilateur peut se faire selon les techniques habituelles. Le ventilateur peut alors être fixé sur le rotor, par des techniques de fixation connues. Dans l'exemple de la figure 3, il est prévu de fixer le ventilateur sur le rotor par des points de soudure 11 a, 11 b.

La figure 4 représente un exemple d'équilibrage d'un ventilateur en tôle par ajout de matière 12a, 12b, 12c sur les pales et/ou par enlèvement de matière 13 sur le flasque du ventilateur.

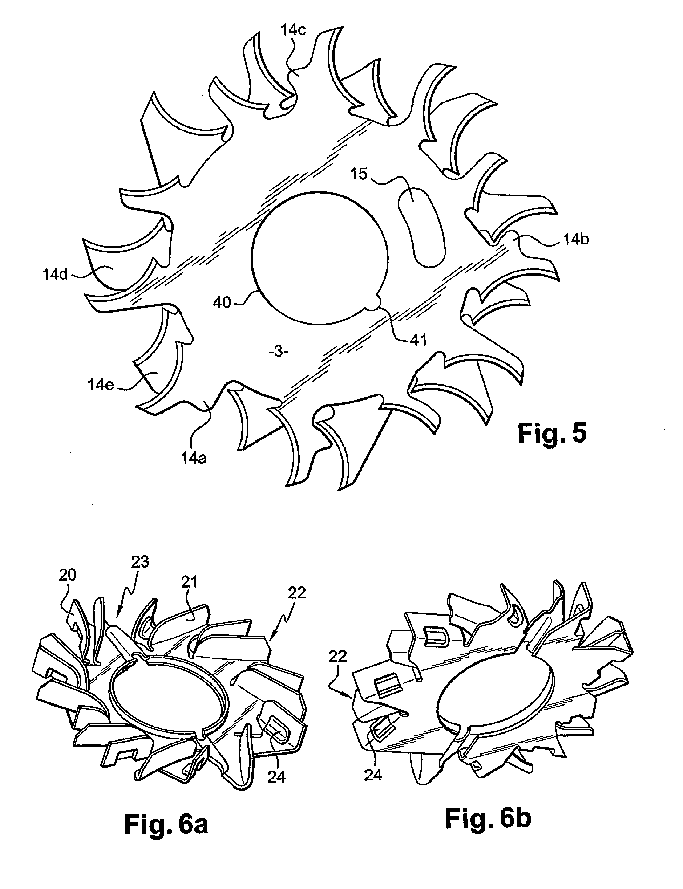

La figure 5 représente l'équilibrage d'un double ventilateur constitué par exemple par la superposition de deux ventilateurs métalliques. Un tel ventilateur est décrit par exemple dans le document FR 2,741,912. Selon le même principe constitutif de l'invention, l'équilibrage se fait par ajout de matière 14a, 14b, 14c, 14d, 14e sur les pales du ventilateur inférieur 20 et/ou sur les pales du ventilateur supérieur 21, le ventilateur inférieur étant celui placé contre le rotor de la machine électrique. Dans le cas on réalise un enlèvement de matière 15 par exemple sous la forme d'un trou ou d'un amincissement de matière, cet enlèvement peut être réalisé sur l'un ou l'autre des deux ventilateurs ou sur les deux et pas nécessairement dans la même zone. Ainsi si par exemple il s'agit de trous, ils ne sont pas forcément superposés.

Les figures 6a et 6b illustrent un autre exemple d'équilibrage réalisés au moyen de chanfreins 22 réalisés sur les pales du ventilateur inférieur et/ou supérieur. Bien évidement ces chanfreins peuvent être réalisé sur un ventilateur simple. La nervure passe-fil 23 ainsi que les nervures 24 de renforcement de la tenue mécanique des pales peuvent aussi être conçue de manière à participer à l'équilibrage du ventilateur.

Avantageusement il est prévu de monter le ventilateur pré-équilibré selon l'invention de manière décentrée par rapport à l'axe de rotation de manière que son centre de gravité coïncide avec l'axe de rotation du rotor. Ce décentrage permet de corriger les erreurs d'exécution de l'outillage permettant la réalisation du ventilateur provenant des tolérances de fabrication. Ce décentrage permet d'ajuster au mieux l'équilibrage du ventilateur sur le rotor de la machine électrique tournante.

En variante on peut également envisager de décentrer l'alésage 40 comme visible à la figure 5, de telle manière que l'axe de rotation de la machine électrique coïncide avec le centre de gravité du ventilateur. L'évidement 41 permet d'indexer en rotation le ventilateur sur le rotor ou dans le cas d'un double ventilateur superposé d'indexer les deux ventilateurs entre-eux. L'évidement 41 peut également contribuer à l'équilibrage du ventilateur de par sa position ou sa forme.

Ce procédé de montage d'un ventilateur équilibré sur un rotor équilibré permet de monter n'importe quel ventilateur sur le rotor. Le ventilateur peut être en métal, en plastique ou en métal surmoulé de plastique tel que décrit par exemple dans le document FR 2,673,338. Il peut comporter toutes les formes possibles, des plus simples aux plus complexes. Le ventilateur peut même comporter un couvercle ou un double étage de pales tel que décrit par exemple dans le document FR 2,811,158. Il n'y a aucune restriction sur le nombre de pales, l'emplacement et l'encombrement de ces pales, dus à l'équilibrage du rotor et du ventilateur.

L'invention bien évidement n'est pas limitée à une machine électrique dotée d'un rotor à griffes constituant par exemple un alternateur de type Lundell. Tout en restant dans le cadre de l'invention, la machine électrique, telle qu'un alternateur, peut être équipée par exemple d'un rotor de type à pôles saillants telle que décrit par exemple dans le document WO 02/054566. Dans ce cas, l'équilibrage ou le pré-équilibrage du rotor est réalisé selon le même principe que pour un rotor à griffes, c'est-à-dire en réalisant des trous sur les extrémités axiales du rotor au moyen de canons perçages. Ainsi, grâce à l'invention, des trous d'équilibrage 25 réalisés dans le rotor peuvent être situés au droit de pales de ventilateurs, le rotor ayant été équilibré avant le montage du ventilateur pré-équilibré sur ce rotor.

## Revendications

1. Ensemble d'éléments destinés à être assemblés ensemble pour former une machine électrique, comprenant un stator (5) bobiné, un rotor (4) monté sur un arbre de rotation, un ventilateur (7, 9) comprenant un flasque (3) et des pales de ventilation (9a, 9b) destinées à être fixées au rotor (4), **caractérisé en ce que** le ventilateur est équilibré.

2. Ensemble d'éléments selon la revendication précédente, dans lequel le ventilateur est un double ventilateur (21, 22) comprenant un premier ventilateur et un deuxième ventilateur superposés.

3. Ensemble d'éléments selon la revendication précédente, **caractérisé en ce que** au moins un des deux ventilateurs comporte des ajouts ou des amincissements ou des enlèvements de matière aux fins d'équilibrage.

4. Ensemble d'éléments selon la revendication précédente **caractérisé en ce que** le flasque de chacun des deux ventilateurs superposés comportent des trous ou des amincissements dans au moins une même zone.

5. Ensemble d'éléments selon la revendication 4, **caractérisé en ce que** le flasque de chacun des deux ventilateurs superposés comportent des trous ou des amincissements dans au moins des zones différentes.

6. Ensemble d'éléments selon l'une quelconque des revendications précédentes, **caractérisé en ce que** le rotor est équilibré.

7. Machine électrique tournante comprenant les éléments de l'ensemble selon l'une des revendications précédentes, dans laquelle le stator (5) entoure le rotor (4), le rotor (4) comportant des zones (26) comprenant des trous d'équilibrage et au moins le ventilateur (7, 9) équilibré monté et fixé sur le rotor.

8. Machine électrique tournante selon la revendication précédente, **caractérisé en ce qu'**un trou d'équilibrage du rotor est au droit d'une pale du ventilateur équilibré.

9. Machine électrique tournante selon l'une des deux revendications précédentes, **caractérisé en ce que** le ventilateur comporte un alésage (40) décentré et dans lequel l'axe de rotation de la machine coïncide avec le centre de gravité du ventilateur.

10. Machine électrique tournante selon l'une des revendications 7 à 9 **caractérisé en ce que** le ventilateur est fixé de manière décentrée sur le rotor et dans lequel l'axe de rotation de la machine coïncide avec le centre de gravité du ventilateur.

11. Machine électrique tournante selon l'une quelconque des revendications précédentes, **caractérisé en ce que** le rotor est un rotor à griffes (45).

12. Procédé de montage d'un ventilateur sur un rotor de machine électrique tournante, le rotor comportant des zones réservées au prééquilibrage, **caractérisé en ce qu'**il comporte des opérations d'équilibrage du ventilateur puis de fixation du ventilateur équilibré sur le rotor.

13. Procédé selon la revendication 12, **caractérisé en ce que** l'opération d'équilibrage du ventilateur consiste à déterminer un centre de gravité du ventilateur dans un repère tridimensionnel (XYZ) et à former des sur-épaisseurs et/ou des zones amincies dans le flasque ou sur les pales du ventilateur pour faire coïncider le centre de gravité du ventilateur avec l'axe de rotation XX de la machine électrique tournante.

14. Procédé selon l'une des revendications 12 à 13, dans lequel est réalisé un trou d'équilibrage sur le rotor dans une zone destinée à être au droit d'une pale du ventilateur équilibré avant l'opération de fixation du ventilateur sur le rotor.

15. Procédé selon l'une des revendications 12 à 13, dans lequel l'étape de fixation du ventilateur est réalisée de manière à ce que le ventilateur est décentré sur le rotor et que l'axe de rotation de la machine coïncide avec le centre de gravité du ventilateur.

## Patentansprüche

1. Einheit von Elementen, die dazu bestimmt sind, zusammengefügt zu werden, um eine elektrische Maschine zu formen, die einen bewickelten Stator (5), einen auf eine Rotationswelle montierten Rotor (4) und einen Lüfter (7, 9) enthält, der einen Flansch (3) und Lüfterschaufeln (9a, 9b) enthält, die dazu bestimmt sind, am Rotor (4) befestigt zu werden, **dadurch gekennzeichnet, dass** der Lüfter ausgeglichen ist.

2. Einheit von Elementen nach dem vorhergehenden Anspruch, wobei der Lüfter ein doppelter Lüfter (21, 22) ist, der einen ersten Lüfter und einen zweiten Lüfter enthält, die übereinander angeordnet sind.

3. Einheit von Elementen nach dem vorhergehenden Anspruch, **dadurch gekennzeichnet, dass** mindestens einer der zwei Lüfter zum Zweck des Ausgleichs Hinzufügungen oder Verdünnungen oder Materialabträge aufweist.

4. Einheit von Elementen nach dem vorhergehenden Anspruch, **dadurch gekennzeichnet, dass** der Flansch jedes der zwei übereinander angeordneten Lüfter Löcher oder Verdünnungen in mindestens der gleichen Zone aufweist.

5. Einheit von Elementen nach Anspruch 4, **dadurch gekennzeichnet, dass** der Flansch jedes der zwei übereinander angeordneten Lüfter Löcher oder Verdünnungen in mindestens verschiedenen Zonen aufweist.

6. Einheit von Elementen nach einem der vorhergehenden Ansprüche, **dadurch gekennzeichnet, dass** der Rotor ausgeglichen ist.

7. Drehende elektrische Maschine, die die Elemente der Einheit nach einem der vorhergehenden Ansprüche enthält, wobei der Stator (5) den Rotor (4) umgibt, wobei der Rotor (4) Zonen (26) aufweist, die Ausgleichslöcher und mindestens den ausgeglichenen Lüfter (7, 9) enthalten, der auf den Rotor montiert und daran befestigt ist.

8. Drehende elektrische Maschine nach dem vorhergehenden Anspruch, **dadurch gekennzeichnet, dass** ein Ausgleichsloch des Rotors sich vor einer Schaufel des ausgeglichenen Lüfters befindet.

9. Drehende elektrische Maschine nach einem der zwei vorhergehenden Ansprüche, **dadurch gekennzeichnet, dass** der Lüfter eine außermittige Bohrung (40) aufweist und die Rotationsachse der Maschine mit dem Schwerpunkt des Lüfters zusammenfällt.

10. Drehende elektrische Maschine nach einem der Ansprüche 7 bis 9, **dadurch gekennzeichnet, dass** der Lüfter außermittig am Rotor befestigt ist und die Rotationsachse der Maschine mit dem Schwerpunkt des Lüfters zusammenfällt.

11. Drehende elektrische Maschine nach einem der vorhergehenden Ansprüche, **dadurch gekennzeichnet, dass** der Rotor ein Klauenrotor (45) ist.

12. Verfahren zur Montage eines Lüfters auf einen Rotor einer drehenden elektrischen Maschine, wobei der Rotor für den Vorausgleich reservierte Zonen aufweist, **dadurch gekennzeichnet, dass** es Vorgänge des Ausgleichs des Lüfters und dann der Befestigung des ausgeglichenen Lüfters am Rotor aufweist.

13. Verfahren nach Anspruch 12, **dadurch gekennzeichnet, dass** der Vorgang des Ausgleichs des Lüfters darin besteht, einen Schwerpunkt des Lüfters in einem dreidimensionalen Koordinatensystem (XYZ) zu bestimmen und Überdicken und/oder verdünnte Zonen im Flansch oder auf den Schaufeln des Lüfters zu formen, um den Schwerpunkt des Lüfters mit der Rotationsachse XX der drehenden elektrischen Maschine zusammenfallen zu lassen.

14. Verfahren nach einem der Ansprüche 12 bis 13, wobei vor dem Vorgang der Befestigung des Lüfters am Rotor ein Ausgleichsloch am Rotor in einer Zone hergestellt wird, die dazu bestimmt ist, sich vor einer Schaufel des ausgeglichenen Lüfters zu befinden.

15. Verfahren nach einem der Ansprüche 12 bis 13, wobei der Schritt der Befestigung des Lüfters so durchgeführt wird, dass der Lüfter auf dem Rotor außermittig ist und die Rotationsachse der Maschine mit dem Schwerpunkt des Lüfters zusammenfällt.

## Claims

1. Set of elements designed to be assembled together to form an electrical machine, comprising a wound stator (5), a rotor (4) mounted on a rotating shaft, a ventilator (7, 9) comprising a flange (3) and ventilation blades (9a, 9b) designed to be attached to the rotor (4), **characterized in that** the ventilator is balanced.

2. Set of elements according to the preceding claim, in which the ventilator is a double ventilator (21, 22) comprising a first ventilator and a second ventilator which are superposed.

3. Set of elements according to the preceding claim, **characterized in that** at least one of the two ventilators comprises, for balancing purposes, regions of addition or thinning or removal of material.

4. Set of elements according to the preceding claim, **characterized in that** the flange of each of the two superposed ventilators comprises holes or thinned regions in at least one same region.

5. Set of elements according to Claim 4, **characterized in that** the flange of each of the two superposed ventilators comprises holes or thinned regions in at least different regions.

6. Set of elements according to any one of the preceding claims, **characterized in that** the rotor is balanced.

7. Rotating electrical machine comprising elements from the set according to one of the preceding claims, in which the stator (5) surrounds the rotor (4), the rotor (4) comprising regions (26) comprising balancing holes and at least the ventilator (7, 9), balanced, mounted and attached to the rotor.

8. Rotating electrical machine according to the preceding claim, **characterized in that** a balancing hole of the rotor is in line with a blade of the balanced ventilator.

9. Rotating electrical machine according to either of the two preceding claims, **characterized in that** the ventilator comprises an off-centre bore (40) and in which the axis of rotation of the machine coincides with the centre of gravity of the ventilator.

10. Rotating electrical machine according to one of Claims 7 to 9, **characterized in that** the ventilator is attached off-centre to the rotor and in which the axis of rotation of the machine coincides with the centre of gravity of the ventilator.

11. Rotating electrical machine according to any one of the preceding claims, **characterized in that** the rotor is a claw rotor (45).

12. Method for mounting a ventilator on a rotor of a rotating electrical machine, the rotor comprising regions reserved for pre-balancing, **characterized in that** it comprises operations of balancing the ventilator, then of attaching the balanced ventilator to the rotor.

13. Method according to Claim 12, **characterized in that** the operation of balancing the ventilator consists in determining a centre of gravity of the ventilator in a three-dimensional coordinate system (XYZ) and in forming, in the flange or on the blades of the ventilator, regions of increased and/or reduced thickness, such that the centre of gravity of the ventilator coincides with the axis of rotation XX of the rotating electrical machine.

14. Method according to either of Claims 12 and 13, in which a balancing hole is created on the rotor in a region designed to be in line with a blade of the balanced ventilator before the operation of attaching the ventilator to the rotor.

15. Method according to either of Claims 12 and 13, in which the step of attaching the ventilator is performed such that the ventilator is off-centre on the rotor and that the axis of rotation of the machine coincides with the centre of gravity of the ventilator.
